# EUROPEAN PATENT APPLICATION

(11) **EP 2 903 340 A1**
(43) Date of publication of application: **05.08.2015**
(21) Application number: 13841112.9
(22) Date of filing: 26.08.2013
(51) Int. Cl.: H04W 36/04, H04W 16/32, H04W 36/02

(54) **MOBILE COMMUNICATION METHOD**

(30) Priority: 25.09.2012 JP 2012211014
(71) Applicant: NTT DOCOMO, INC., Chiyoda-ku Tokyo 100-6150 (JP)
(72) Inventor: MORIOKA, Yasufumi, Tokyo 100-6150 (JP); YASUDA, Hiroto, Tokyo 100-6150 (JP); UCHINO, Tooru, Tokyo 100-6150 (JP); HAPSARI, Wuri Andarmawanti, Tokyo 100-6150 (JP)
(74) Representative: Hoffmann Eitle
(86) International application number: PCT/JP2013/072653
(87) International publication number: WO 2014/050397

(57) **Abstract**

A mobile communication method according to the invention includes the steps of: starting, by a radio base station eNB, addition processing of adding a radio base station PhNB to a transmission path for user data of a mobile station UE when the mobile station UE is in communication in a macro cell under the radio base station eNB and the radio base station PhNB managing a small cell having a coverage including a location where the mobile station UE exists is selected as the transmission path for the user data of the mobile station UE; notifying, by the radio base station eNB, the radio base station PhNB of management information of a sequence number in the addition processing; and resetting information on a header compression and security setting information by the radio base station PhNB in the addition processing.

## Description

### TECHNICAL FIELD

The present invention relates to a mobile communication method.

### BACKGROUND ART

In LTE (Long Term Evolution), there has been discussed an introduction of a small cell (or a phantom cell) for the purposes of effectively utilizing high frequency (equal to or higher than 3.5GHz) which is inferior in propagation characteristics and achieving high-speed and large-capacity communications utilizing broadband performance.

### PRIOR ART DOCUMENT

### NON-PATENT DOCUMENT

Non-patent document 1: 3GPP TS36.300

### SUMMARY OF THE INVENTION

A radio base station PhNB managing such a small cell has functional limitation such as absence of a RRC (Radio Resource Control) layer function, as compared with a radio base station eNB managing a macro cell.

In view of the above point, there has been discussed an introduction of a method of transmitting user data (U-plane data) of a mobile station UE through a radio base station eNB even when the mobile station UE is in communication in a small cell.

However, existing LTE has a problem that there has not been discussed how to add a radio base station PhNB to a transmission path for user data of a mobile station UE while the mobile station UE is in communication in a macro cell.

Likewise, existing LTE has a problem that there has not been discussed how to delete a radio base station PhNB managing a small cell from a transmission path for user data of a mobile station UE when the mobile station UE is in communication in the small cell.

Accordingly, the invention has been made in view of the above problems, and an objective of the invention is to provide a mobile communication method in which, when a radio base station PhNB managing a small cell is added or deleted, a transmission path for user data of a mobile station UE can be changed without data loss and without making functions of a radio base station eNB and a radio base station PhNB complicated.

A first feature of the present invention is summarized as a mobile communication method including the steps of: starting, by a first radio base station, addition processing of adding a second radio base station to a transmission path for user data of a mobile station when the mobile station is in communication in a macro cell under the first radio base station and the second radio base station managing a small cell having a coverage including a location where the mobile station exists is selected as the transmission path for the user data of the mobile station; notifying, by the first radio base station, the second radio base station of management information of a sequence number in the addition processing; and resetting information on a header compression and security setting information by the second radio base station in the addition processing.

A second feature of the present invention is summarized as a mobile communication method including the steps of: starting, by a first radio base station, deletion processing of deleting a second radio base station from a transmission path for user data of a mobile station when the second radio base station goes out of use as the transmission path for the user data of the mobile station, in a case where the first radio base station managing a macro cell and the second radio base station managing a small cell having a coverage including a location where the mobile station exists are included in the transmission path for the user data of the mobile station and the mobile station is in communication in the small cell; notifying, by the second radio base station, the first radio base station of management information of a sequence number in the deletion processing; and resetting information on a header compression and security setting information by the first radio base station in the deletion processing.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a radio base station eNB according to the first embodiment of the invention.
[Fig. 3] Fig. 3 is a sequential diagram indicating an operation of the mobile communication system according to the first embodiment of the invention.
[Fig. 4] Fig. 4 is a sequential diagram indicating an operation of the mobile communication system according to the first embodiment of the invention.

### MODE FOR CARRYING OUT THE INVENTION

### (Mobile communication system according to the first embodiment of the invention)

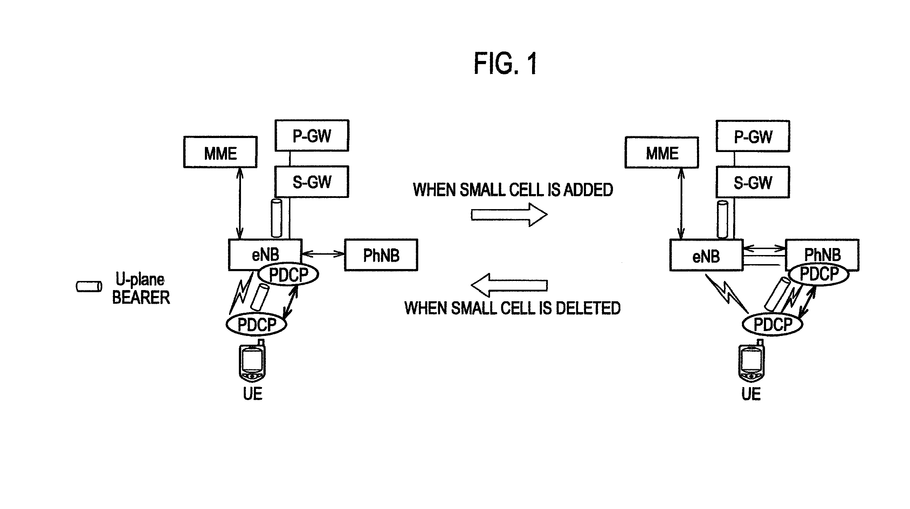

Described by referring to Figs. 1 to 4 is a mobile communication system according to a first embodiment of the present invention.

As illustrated in Fig. 1, the mobile communication system according to the embodiment is an LTE mobile communication system, which includes a gateway apparatus P-GW (PDN Gatewey) /S-GW (Serving Gateway), a mobility management node MME (Mobility Management Entity), a radio base station PhNB managing a small cell, and a radio base station eNB managing a macro cell.

Here, a coverage area of the macro cell and a coverage area of the small cell are deployed to at least partially overlap with each other.

As illustrated in Fig. 1, when a radio base station PhNB managing a small cell having a coverage including a location where a mobile station UE exists is selected as a transmission path for user data of the mobile station UE in a case where the mobile station UE is in communication in a macro cell under a radio base station eNB, the user data of the mobile station UE is transmitted through a U-plane bearer which is established between a gateway apparatus S-GW and the radio base station eNB, a U-plane bearer which is established between the radio base station eNB and a radio base station PhNB, and a U-plane bearer which is established between the radio base station PhNB and the mobile station UE.

In other words, in such a case, the transmission path for the user data of the mobile station UE is changed from the path of the gateway apparatus S-GW ↔ the radio base station eNB ↔ the mobile station UE to the path of the gateway apparatus S-GW ↔ the radio base station eNB ↔ the radio base station PhNB ↔ the mobile station UE.

For example, when the coverage area of the radio base station PhNB is included in the coverage area of the radio base station eNB and the location where the mobile station UE exists is included in the coverage area of the radio base station PhNB, the radio base station PhNB is assumed to be selected as a transmission path for user data of the mobile station UE.

On the other hand, as illustrated in Fig. 1, in a case where the mobile station UE is in communication in a small cell under the radio base station PhNB, when the radio base station PhNB goes out of use as the transmission path for the user data of the mobile station UE, the user data of the mobile station UE is to be transmitted through a U-plane bearer established between the gateway apparatus S-GW and the radio base station eNB and a U-plane bearer established between the radio base station eNB and the mobile station UE.

In other words, in such a case, the transmission path for the user data of the mobile station UE is changed from the path of the gateway apparatus S-GW ↔ the radio base station eNB ↔ the radio base station PhNB ↔ the mobile station UE to the path of the gateway apparatus S-GW ↔ the radio base station eNB ↔ the mobile station UE.

For example, when the mobile station UE goes out from the coverage of the radio base station PhNB, the radio base station PhNB goes out of use as the transmission path for the user data of the mobile station UE.

With the above configuration, the radio base station PhNB does not need to establish a logical path with the gateway apparatus S-GW and only needs to guarantee connectivity with the radio base station eNB. Thus, processing load of the radio base station PhNB can be reduced.

Also, the gateway apparatus S-GW does not need to include a function to identity a small cell. Thus, an impact on the existing architecture can be minimized.

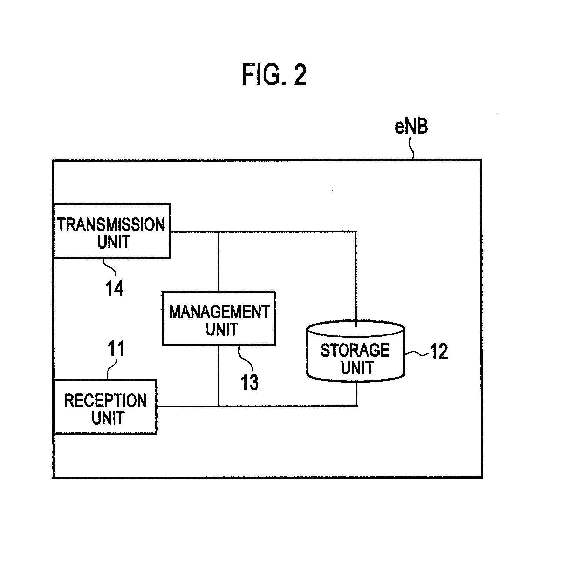

As illustrated in Fig. 2, the radio base station eNB includes a reception unit 11, a storage unit 12, a management unit 13, and a transmission unit 14.

The reception unit 11 is configured to receive various kinds of signals from the gateway apparatus S-GW, the mobility management node MME, the radio base station PhNB, the mobile station UE, and the like.

The reception unit 11 receives downlink user data addressed to the mobile station UE from the gateway apparatus S-GW or receives uplink user data of the mobile station from the radio base station PhNB or the mobile station UE, or receives "E-RAB setup response" from the radio base station PhNB.

The storage unit 12 is configured to perform buffering on the downlink user data addressed to the mobile station UE or the uplink user data of the mobile station, which are received by the reception unit 11 in a tunneling protocol layer or a PDCP (Packet Data Convergence Protocol) layer.

In the embodiment, described is an example using GTP (GPRS Tunneling Protocol) as the tunneling protocol, but other tunneling protocol such as PMIP (Proxy Mobile IP) may be used.

The management unit 13 is configured to manage information on a U-plane bearer, security setting information, information on a PDCP layer (PDCP Config), information on a transfer mode and a transmission state (RoHC context), management information of a sequence number, and the like.

Here, the information on a U-plane bearer includes "E-RAB ID" or "QoS information (E-RAB Level QoS Parameters)" or the like.

Also, the security setting information includes UE Security capability, AS Security Information and the like.

In addition, the information on a PDCP layer includes information on a maximum length of a sequence number or a header compression or information whether or not "PDCP Status Report" is needed.

Furthermore, the information on the header compression includes "MAX_ID" or "PROFILES" or the like.

Here, the "MAX_ID" is a maximum value of the context ID for identifying a flow and the "PROFILES" is information indicating which header is to be compressed.

The transmission unit 14 is configured to transmit various kinds of signals to the gateway apparatus S-GW, the mobility management node MME, the radio base station PhNB, the mobile station UE, and the like.

For example, the transmission unit 14 transmits uplink user data of the mobile station UE to the gateway apparatus S-GW, transmits downlink user data addressed to the mobile station to the radio base station PhNB or the mobile station UE, or transmits "RRC Connection Reconfiguration" to the mobile station UE, or transmits "E-RAB setup request" to the radio base station PhNB.

Here, when the radio base station PhNB managing a small cell having the coverage including the location where the mobile station UE exists is selected as the transmission path for user data of the mobile station UE in a case where the mobile UE is in communication in the macro cell under the radio base station eNB, the transmission unit 14 transmits the "E-RAB setup request" to the radio base station PhNB, so that processing of adding the radio base station PhNB to the transmission path for the user data of the mobile station UE is started.

Also, when the radio base station PhNB goes out of use as the transmission path for the user data of the mobile station UE in a case where the radio base station eNB and the radio base station PhNB are included in the transmission path for the user data of the mobile station UE and the mobile station UE is in communication in the small cell, the transmission unit 14 transmits the "E-RAB release request" to the radio base station PhNB, so that processing of deleting the radio base station PhNB from the transmission path for the user data of the mobile station UE is started.

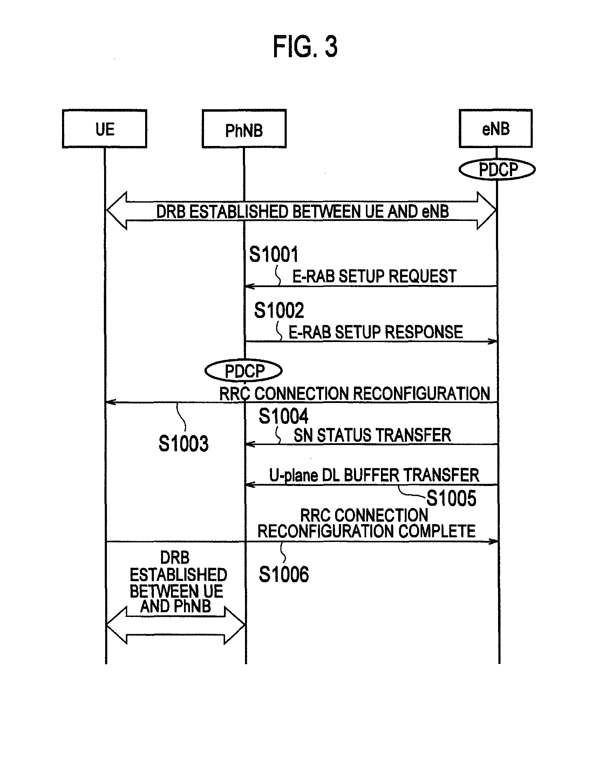

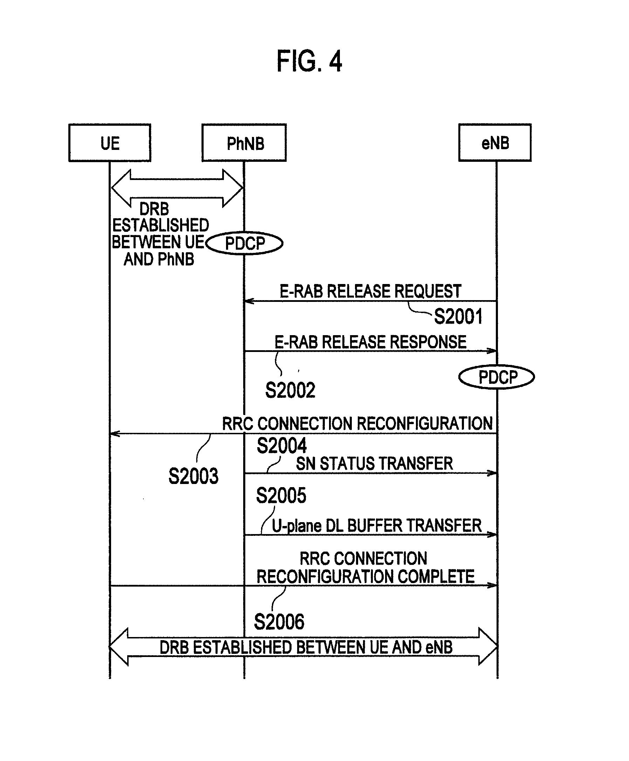

Hereinafter, an operation of the mobile communication system according to the embodiment is described by referring to Figs. 3 and 4.

Firstly, described by referring to Fig. 4 is an operation, in the mobile communication system according to the embodiment, of selecting the radio base station PhNB managing the small cell having the coverage where the mobile station UE exists as the transmission path for the user data of the mobile station UE when the mobile station UE is in communication in the macro cell under the radio base station eNB.

As illustrated in Fig. 3, when the radio base station eNB detects the radio base station PhNB being selected as the transmission path for the user data of the mobile station UE in a state where DRB (Data Radio Bearer) is established with the mobile station UE, the radio base station eNB stops transmission of the downlink user data addressed to the mobile station to the mobile station UE, and at step S1001, transmits "E-RAB setup request" requesting to establish a U-plane bearer between the radio base station eNB and the radio base station PhNB to the radio base station PhNB.

Here, the radio base station eNB notifies the radio base station PhNB of the information on the U-plane bearer or the like.

In response to the "E-RAB setup request, " the radio base station PhNB creates the U-plane bearer between the radio base station eNB and the radio base station PhNB and resets the security setting information or the information in the PDCP layer (PDCP Config) or the information on a transfer mode or a transmission state (RoHC context) or the like, and at step S1002, transmits the "E-RAB setup response" to the radio base station eNB.

At step S1003, the radio base station eNB transmits "RRC Connection Reconfiguration" to the mobile station UE.

The mobile station UE stops the transmission of the uplink user data to the radio base station eNB when the "RCC Reconfiguration" is received.

The radio base station eNB notifies the radio base station PhNB of management information of a sequence number (such as a sequence number capable of being used next) in the uplink and the downlink by "SN STATUS TRANSFER" at step S1004, and transfers the buffering uplink user data and downlink user data at step S1005.

Here, the radio base station eNB may notify the radio base station PhNB of all or one piece of the management information of the sequence number of the "DRB RLC AM" or "DRB RLC UM" or "SRB (Signaling Radio Bearer)."

Instead, the radio base station eNB may notify the radio base station PhNB of the management information of the sequence number by transmitting a reception status in the uplink and the downlink with "E-RAB Request" in place of "SN STATUS TRANSFER. "

Here, the management information of the sequence number may be notified by the "E-RAB setup request" at step S1001.

At step S1006, the mobile station UE transmits "RRC Connection Reconfiguration Complete" to the radio base station eNB.

In response to the "RRC Connection Reconfiguration Complete," the radio base station eNB stops managing the information on a U-plane bearer, the security setting information, the information on a PDCP layer (PDCP Config), the information on a transfer mode and a transmission state (RoHC context) or the like.

Here, the DRB is established between the radio base station PhNB and the mobile station UE and transmission of the uplink user data from the mobile station UE to the radio base station PhNB is restarted, and transmission of the downlink user data addressed to the mobile station UE from the radio base station PhNB to the mobile station UE is restarted.

Secondly, described by referring to Fig. 4 is an operation in the mobile communication system according to the embodiment in which the radio base station PhNB goes out of use as the transmission path for the user data of the mobile station UE when the mobile station UE is in communication in a small cell under the radio base station PhNB.

As illustrated in Fig. 4, when the radio base station eNB detects the radio base station PhNB not being utilized as the transmission path for the user data of the mobile station UE in a state where the DRB is established between the radio base station PhNB and the mobile station UE, the radio base station eNB stops the transmission of the downlink user data addressed to the mobile station UE to the radio base station PhNB, and at step S2001, transmits "E-RAB release request" requesting to release the U-plane bearer between the radio base station eNB and the radio base station PhNB to the radio base station PhNB.

In response to the "E-RAB release request, " the radio base station PhNB releases the U-plane bearer between the radio base station eNB and the radio base station PhNB and at step S2002, notifies the radio base station eNB of information on the U-plane bearer or the like by the "E-RAB release response."

The radio base station eNB starts managing the information on the U-plane or the like, and resets the security setting information, information on the PDCP layer (PDCP Config) or the information on a transfer mode and a transmission state (RoHC context) or the like, and transmits "RRC Connection Reconfiguration" to the mobile station UE.

The mobile station UE stops the transmission of the uplink user data to the radio base station PhNB when the "RRC Reconfiguration" is received.

At step S2004, the radio base station PhNB notifies the radio base station eNB of management information of a sequence number (such as a sequence number capable of being used next) in the uplink and downlink by "SN STATUS TRANSFER" and stops the transmission of the downlink user data addressed to the mobile station to the mobile station UE, and at step S2005, transfers the buffering uplink user data and downlink user data and stops managing the information on the U-plane bearer, security setting information, information on a PDCP layer (PDCP Config), information (RoHC context) relation to a transfer mode, a transmission state, or the like.

Here, the radio base station PhNB may notify the radio base station eNB of the management information of a sequence number about all or one piece of "DRB RLC AM" or "DRB RLC UM" or "SRB (Signaling Radio Bearer)."

Instead, the radio base station PhNB may notify the radio base station eNB of the management information of a sequence number by transmitting a reception status in the uplink and the downlink by using "E-RAB release Request" in place of the "SN STATUS TRANSFER."

Here, the management information of a sequence number may be notified by the "E-RAB release response" at step S2002.

At step S2006, the mobile station UE transmits "RRC Connection Reconfiguration Complete" to the radio base station eNB.

Here, the DRB is established between the radio base station eNB and the mobile station UE, the transmission of the uplink user data of the mobile station UE from the mobile station UE to the radio base station eNB is restarted, and the transmission of the downlink user data addressed to the mobile station UE from the radio base station eNB to the mobile station UE is restarted.

The features of the present embodiment may also be expressed as follows.

A first feature of the present embodiment is summarized as a mobile communication method including the steps of: starting, by a radio base station eNB (first radio base station) , addition processing of adding a radio base station PhNB (second radio base station) to a transmission path for user data of a mobile station UE when the mobile station UE is in communication in a macro cell under the radio base station eNB and the radio base station PhNB managing a small cell having a coverage including a location where the mobile station UE exists is selected as the transmission path for the user data of the mobile station UE; notifying, by the radio base station eNB, the radio base station PhNB of management information of a sequence number in the addition processing; and resetting information on a header compression and security setting information by the radio base station PhNB in the addition processing.

With the above-described configuration, the radio base station eNB notifies the radio base station PhNB of management information of a sequence number when the radio base station PhNB is added, and the information on a header compression and security setting information are reset in the radio base station PhNB. Thus, the transmission path of the mobile station UE can be changed without data loss and without making functions of the radio base station eNB and the radio base station PhNB complicated.

In the first feature of the present embodiment, the radio base station eNB stops transmission of downlink user data addressed to the mobile station UE to the mobile station UE when starting the addition processing, and the mobile station UE stops transmission of uplink user data to the radio base station eNB in response to reception of "RRC Connection Reconfiguration (connection establishment signal) " from the radio base station eNB.

With the above-described configuration, the transmission path for the user data of the mobile station UE can be changed without data loss when the radio base station PhNB is added.

A second feature of the present embodiment is summarized as a mobile communication method including the steps of: starting, by a radio base station eNB, deletion processing of deleting a radio base station PhNB from a transmission path for user data of a mobile station UE when the radio base station PhNB goes out of use as the transmission path for the user data of the mobile station UE, in a case where the radio base station eNB managing a macro cell and the radio base station PhNB managing a small cell having a coverage including a location where the mobile station UE exists are included in the transmission path for the user data of the mobile station UE and the mobile station is in communication in the small cell; notifying, by the radio base station PhNB, the radio base station eNB of management information of a sequence number in the deletion processing; and resetting information on a header compression and security setting information by the radio base station eNB in the deletion processing.

With the above-described configuration, when the radio base station PhNB is deleted, the radio base station PhNB notifies the radio base station eNB of the management information of a sequence number and the information on a header compression and security setting information are reset in the radio base station eNB. Thus, the transmission path for the user data of the mobile station UE can be changed without data loss and without making functions of the radio base station eNB and the radio base station PhNB complicated.

In the second feature of the present embodiment, the radio base station eNB stops transfer of downlink user data addressed to the mobile station UE to the radio base station PhNB when starting the deletion processing, and the mobile station UE stops transmission of uplink user data to the radio base station PhNB in response to reception of "RRC Connection Reconfiguration" from the radio base station eNB.

With the above-described configuration, the transmission path of the mobile station UE can be changed without data loss when the radio base station eNB is added.

It should be noted that the foregoing operations of the mobile stations UE, the radio base stations eNB/PhNB, the mobility management node MME, and the gateway apparatus S-GW may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile stations UE, the radio base stations eNB/PhNB, the mobility management node MME, and the gateway apparatus S-GW. Otherwise, the storage medium and the processor may be provided as discrete components inside the mobile stations UE, the radio base stations eNB/PhNB, the mobility management node MME, and the gateway apparatus S-GW.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2012-211014 (filed on September 25, 2012) is incorporated by reference in the present specification.

### INDUSTRIAL APPLICABILITY

As described above, the invention can provide a mobile communication method in which, when a radio base station PhNB managing a small cell is added or deleted, a transmission path for user data of a mobile station UE can be changed without data loss and without making functions of a radio base station eNB and the radio base station PhNB complicated.

### EXPLANATION OF REFERENCE NUMERALS

- S-GW: gateway apparatus
- MME: mobility management node
- eNB/PhNB: radio base station
- UE: mobile station
- 11: reception unit
- 12: storage unit
- 13: management unit
- 14: transmission unit

## Claims

1. A mobile communication method comprising the steps of:
starting, by a first radio base station, addition processing of adding a second radio base station to a transmission path for user data of a mobile station when the mobile station is in communication in a macro cell under the first radio base station and the second radio base station managing a small cell having a coverage including a location where the mobile station exists is selected as the transmission path for the user data of the mobile station;
notifying, by the first radio base station, the second radio base station of management information of a sequence number in the addition processing; and
resetting information on a header compression and security setting information by the second radio base station in the addition processing.

2. The mobile communication method according to claim 1, wherein
the first radio base station stops transmission of downlink user data addressed to the mobile station to the mobile station when starting the addition processing, and
the mobile station stops transmission of uplink user data to the first radio base station in response to reception of a connection establishment signal from the first radio base station.

3. A mobile communication method comprising the steps of:
starting, by a first radio base station, deletion processing of deleting a second radio base station from a transmission path for user data of a mobile station when the second radio base station goes out of use as the transmission path for the user data of the mobile station, in a case where the first radio base station managing a macro cell and the second radio base station managing a small cell having a coverage including a location where the mobile station exists are included in the transmission path for the user data of the mobile station and the mobile station is in communication in the small cell;
notifying, by the second radio base station, the first radio base station of management information of a sequence number in the deletion processing; and
resetting information on a header compression and security setting information by the first radio base station in the deletion processing.

4. The mobile communication method according to claim 3, wherein
the first radio base station stops transfer of downlink user data addressed to the mobile station to the second radio base station when starting the deletion processing, and
the mobile station stops transmission of uplink user data to the second radio base station in response to reception of a connection establishment signal from the first radio base station.
